# EUROPEAN PATENT SPECIFICATION

(11) **EP 1 269 747 B1**
(45) Date of publication and mention of the grant of the patent: **20.07.2005**
(21) Application number: 01905089.7
(22) Date of filing: 26.01.2001
(51) Int. Cl.: H04N 5/445, H04N 7/088

(54) **PROVIDING ADVERTISING INFORMATION WITH VIDEO CONTENT**
VERSORGUNG VON WERBUNGSINFORMATION MIT VIDEO-INHALTEN
INFORMATION PUBLICITAIRE ACCOMPAGNEE D'UN CONTENU VIDEO

(30) Priority: 31.03.2000 US 540966
(43) Date of publication of application: 02.01.2003
(73) Proprietor: INTEL CORPORATION, Santa Clara, CA 95052 (US)
(72) Inventor: KINDER, David, B., Portland, OR 97229 (US)
(74) Representative: Jacoby, Georg, Dr.
(86) International application number: PCT/US2001/002578
(87) International publication number: WO 2001/076236

(56) References cited:
- WO-A-00/02380
- WO-A-99/04568
- US-A- 5 361 091
- PATENT ABSTRACTS OF JAPAN vol. 1999, no. 05, 31 May 1999 (1999-05-31) -& JP 11 041566 A (SONY CORP), 12 February 1999 (1999-02-12) & US 6 246 441 A 12 June 1999 (1999-06-12)

## Description

### Background

This invention relates to communicating ancillary information associated with a plurality of audio/video programs, such as television content associated with a plurality of channels.

Ancillary information, such as program subtitles, emergency messages, closed caption messages and program guide information, may be transmitted with regular television content. Other types of ancillary information that may be sent with television content includes enhancement data such as web pages, multimedia information or other digital data files. Ancillary information may be sent during the vertical blanking interval (VBI) of an analog television broadcast signal. Alternatively, the ancillary information may be sent with digital television content over a digital transport medium.

Various standards exist that provide for transmission of ancillary information with television content. One standard is the Advanced Television Enhancement Forum (ATVEF) Specification, Draft 1.1r.26, dated February 2, 1999. The ATVEF Specification provides for transmission of enhancement data along with television content in both analog and digital systems, such as cable systems, satellite systems, terrestrial systems, and so forth. The combination of enhancement data and the television content may be referred to as enhanced television content.

Enhanced television content provides more information options to viewers. For example, a viewer may be presented with the option of viewing advertisements, educational information and so forth while watching regular television programming.

Viewers of enhanced television are afforded an opportunity to get additional information about the main video content with existing systems. However, no such system exists with respect to obtaining additional information about advertisements that accompany the video content. In a number of cases, viewers who see one or more advertisements may wish to study the advertisements in greater depth to understand product comparisons or other information. In addition, viewers may wish to obtain contact information from those advertisements.

Thus, there is a need for better ways to enable users to assess and evaluate advertisements that accompany video content.

### Brief Description of the Drawings

Figure 1 is a schematic depiction of a system for broadcasting television content together with ancillary information for advertisements;
Figure 2 is a depiction of a display screen showing a graphical user interface in accordance with one embodiment of the present invention;
Figure 3 is a depiction of a display screen showing another graphical user interface in accordance with an embodiment of the present invention;
Figure 4 is a flow chart for software for implementing one embodiment of the present invention;
Figure 5 is a flow chart for software for implementing a feature of the embodiment shown in Figure 4 in accordance with one embodiment of the present invention; and
Figure 6 is a flow chart for software resident on the transmitter in accordance with one embodiment of the invention.

### Detailed Description

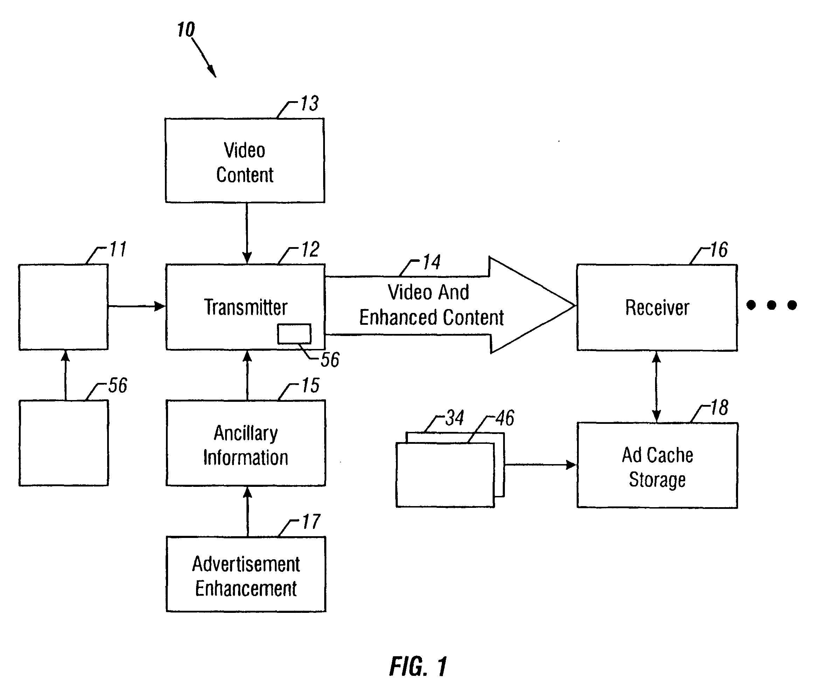

Referring to Figure 1, an information delivery system 10 according to one embodiment of the present invention includes a content creator or transmitter 12, a transport system 14 and a plurality of receivers 16. The receivers 16 may be located in a variety of distributed sites. The content creator or transmitter 12 originates ancillary information or enhancement data 15 (or other type of ancillary information) and television or video content 13 (or other types of content including audio and/or video data) to be transmitted by the transport system 14.

Alternatively, the transmitter 12 may create enhancement data with television content provided by another source to the system 14. Enhancement data may include graphics (e.g., web pages, multimedia information or other digital data files), text, presentation layouts and synchronization information. The combination of enhancement data and television content is referred to as enhanced television content.

The transport operator system 14 provides an enhanced television content delivery infrastructure that may include terrestrial, cable, satellite or other types of transmission facilities (either analog or digital). Enhanced television content may be transmitted over a transport medium that may be a terrestrial, cable, satellite or other type of link to the receiver 16. The receiver 16 may be a television, set-top box, personal computer or other types of processor-based systems adapted to receive television content and associated enhancement data.

As used in this description, the term audio/video (A/V) content is intended to include any type of audio and/or video data, and may be transmitted and distributed to one or more receiving sites for presentation to viewers and/or listeners. As used here, A/V content may refer to content that may include both an audio and a video portion or one or more audio or video portions. Further, ancillary information other than enhancement data may be transmitted with the A/V content. For example, ancillary information may include program subtitles, emergency messages, closed caption messages and program guide information.

Thus, the transport system 14 may contain audio, video, text and data such as ancillary information, all tightly associated with a single transport stream program. Alternatively, the A/V content may be transmitted separately from but in association with the ancillary information. When the user tunes to the transport stream program, the receiving device 16 can determine the associated audio, video and data, for example because they are all marked as being part of the same program.

One standard for describing transmission of enhancement data with television content is the ATVEF Specification. The enhancement data may be transmitted in a number of different ways from the transport operator system 14 to the receiver 16, depending on the type of transport medium utilized. For example, with an analog transport medium such as the National Television Standards Committee (NTSC) Standard of the Electronics Industries Association, portions of the enhancement data may be sent to the vertical blanking interval (VBI) of the NTSC transmission. A description of NTSC may be found the book "Video Demystified: A Handbook for the Digital Engineer" by Keith Jack, published High Text Publication (2d, Ed. 1996). Other types of transport media (analog or digital) may provide different mechanisms of communicating the enhancement data.

The enhancement data according to the ATVEF Specification may include enhancements each having the following components: a ATVEF announcement, a resource and a trigger. The three components may be transmitted using Internet protocol (IP) multicast to the receivers. An IP multicast standard is described in Request for Comment (RFC 1301) entitled "Multicast Transport Protocol".

Generally, an ATVEF announcement indicates that enhancement data is being transmitted and a resource includes one or more files that contain the enhancement data and a trigger synchronizes the enhancement data with the TV transmission. An announcement may describe the location of both the resource stream and the trigger stream. For each television channel, one or more enhancements may be offered as choices presented to the user, who can select which of the enhancements, if any, to view. The ATVEF Specification uses a one-way transmission protocol (the Unidirectional Hypertext Transfer Protocol or UHTTP) described in the ATVEF Specification) to deliver resource data.

In one embodiment of the invention, the announcements, resources and triggers associated with an A/V channel may be delivered at about the same time as, and with the transmission of, the A/V content on that channel. Alternatively, ancillary data may be transmitted separately for subsequent association with the A/V content. Conventionally, for each enhancement, the resource stream may be delivered along with the announcement, with the resource stream stored locally in the receiver 16. If a viewer so desires, the enhancement data may be retrieved from local storage at the receiver for viewing.

In accordance with one embodiment of the present invention, the enhancement data stream includes not only conventional enhancement data, but also advertising enhancement data 17. The term "advertisement enhancement" refers to any information which is transmitted to the receiver in connection with advertisements. The data 17 may describe the advertisement such as the product name and manufacturer, as well as contact information for the manufacturer. The enhancement data 17 may also include augmentation information such as information about how to get free samples of the advertised product, discount coupons, or information needed to make an on-line purchase of the product over the Internet.

The advertisement enhancement data 17 is then combined with other ancillary information 15 in the transmitter 12 for transmission in connection with the video content 13. The transmitter 12 may also include a storage device 11 which may store software 56 for controlling the operation of the transmitter 12.

Similarly, each receiver 16 may include an ad cache storage 18 which stores the advertisement enhancement data 17. In addition, the ad cache storage 18 may store software 34 and 46 which controls the manipulation of the advertisement enhancement data at the receiver 16.

In some embodiments, script may be transmitted from the transmitter 12 to the receiver 16 to provide the software 34 and 46 which is involved in manipulating the advertisement enhancement data 17. Thus, the receiver 16 may choose to receive such software from the transmitter 12 for storage in the storage 18.

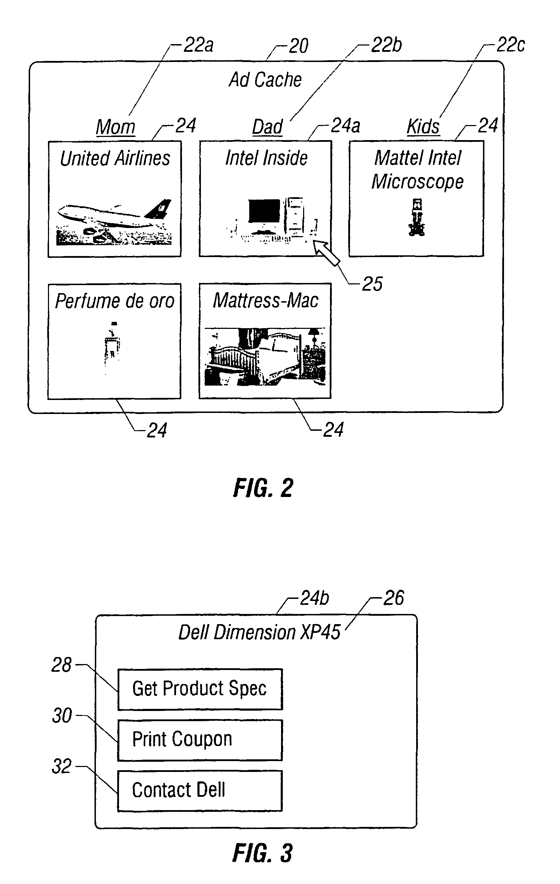

Referring to Figure 2, a user may select a variety of advertisements in the course of viewing video content for storage in the ad cache storage 18. Upon request, the information stored in the ad cache storage 18 may be displayed as a graphical user interface 20. The ad cache may be broken into categories indicated at 22a, 22b and 22c. In this case, the categories of files are associated with family members. In other cases, the categories 22 may be topical or content based categories. In one embodiment of the present invention, the categories are user definable. Thus, one or more graphical user icons 24 associated with a displayed advertisement may be displayed in the graphical user interface 20 in the appropriate categories 22.

In one embodiment of the present invention, the graphical user interfaces 24 are obtained by capturing and storing a frame which is displayed on the receiver 16 at the time the user makes a user selection. The user selection may be the operation of a dedicated button on a remote control that causes a currently displayed frame to be cached. Alternatively, an on screen display may include a region for the user to mouse click on using a cursor controlled by the remote control unit. When the user uses the remote control unit in a mouse-like clicking operation, the currently displayed frame may be immediately recorded.

For example, an icon may be present on the display screen for the receiver 16. When the user is viewing an advertisement which the user wishes to store in the ad cache storage 18, the user simply clicks on the ad cache icon and thereby causes the currently displayed frame to be stored.

When the frame is stored, the advertisement enhancement data 17 associated with the currently displayed ad is linked to the captured frame. Thus, when the user clicks on one of the graphical user interfaces 24 (which corresponds to the captured frame), the advertisement enhancement data 17 associated with that advertisement is automatically invoked.

Thus, as indicated in Figure 2, a cursor 25 is positioned over the graphical user interface 24a associated with an advertisement. When the user clicks on that advertisement, a graphical user interface 24b displays the advertising enhancement data 17 as indicated as shown in Figure 3. Thus, in one embodiment of the present invention, information 26 may identify the manufacturer and product name that was displayed. In addition, a number of graphical user interface buttons 28, 30 and 32 may be displayed using information in the enhancement data 17. The button 28 allows the user to mouse click to get additional product specification details for the identified product. The button 30 allows the user to print out a coupon which would allow the user to purchase the product at a reduced price. The button 32 enables the user to immediately contact the manufacturer. Other formats for allowing the user to get additional information may be provided as well. Also, additional advertising enhancement content may be provided in other embodiments.

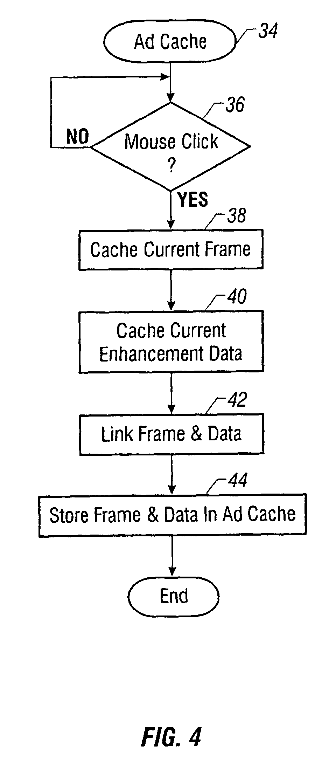

The ad cache software 34, shown in Figure 4, stored in the ad cache storage 18 awaits a mouse click input from the viewer, as indicated in diamond 36. Once the user makes a mouse click input indicating the user wishes to cache a currently playing advertisement, the frame associated with the current advertisement may be cached, as indicated in block 38, in one embodiment. That is, the information is stored in the ad cache storage 18. The information is converted into a thumbnail or scaled down form so that it may be displayed in the graphical user interface 20 when called upon by the user. In addition, the enhancement data associated with the displayed advertisement is also cached in the ad cache storage 18 as indicated in block 40.

Next, the frame that was cached and the associated enhancement data are linked by an identifier that allows enhancement data to be called when the thumbnail version of the frame is selected. Thus, referring to Figures 2 and 3, the frame may be displayed in a thumbnail form indicated at 24. When the user clicks on the frame 24 as indicated at 25 the enhancement data is displayed as the screen display 24b in Figure 3. Thus, as indicated in block 44 in Figure 4, the frame and enhancement data are stored in the ad cache 18 for recall by the user.

The user can select the ad cache in one of a variety of ways. For example, the user may call up a menu using a remote control unit. The user may select the ad cache display 20 which brings up the graphical user interface 20. Alternatively, a dedicated button may be provided on a remote control unit to call the ad cache display 20.

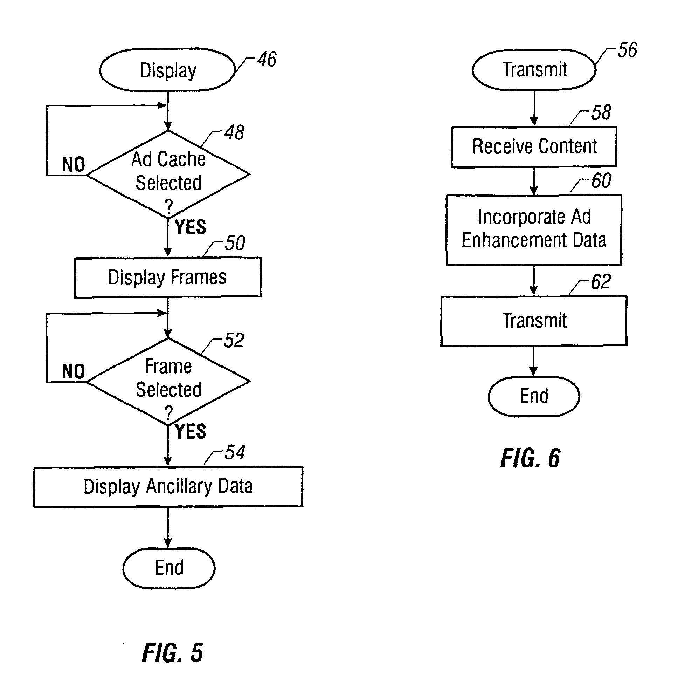

Thus, referring to Figure 5, when the user selects the ad cache display illustrated for example in Figure 2, the software 46 stored in the ad cache storage 18 may cause the ad cache graphical user interface 20 to be displayed. Thus, when the ad cache is selected, as indicated in diamond 48, the previously captured frames are displayed as indicated in block 50 and as also shown in Figure 2.

The software 46 then monitors for a selection of a particular frame as indicated in diamond 52. Again, this may be done by mouse clicking on a thumbnail version of the captured frame provided as a graphical user interface 24 (Figure 2). Upon user selection of a particular frame, the ancillary data associated with that frame may be displayed as indicated in block 54. This may correspond in one embodiment of the present invention to the graphical user interface 24b shown in Figure 3. The user then can seek still additional information by operating one or more user selectable options such as the buttons 28, 30 and 32 associated with the graphical user interface 24b.

In another embodiment of the present invention, instead of causing the currently displayed frame to be automatically cached, the enhancement data 17 may include an icon or other graphics associated with and identifying the particular advertisement that is of interest. When the advertisement is mouse clicked on the enhanced data including the icon information is stored. That icon may then be used as the interface 24. In such case, the linking between the icon and the other enhancement textual data may be done at the transmitter end. In one embodiment of the present invention, instead of actually transmitting the graphics to form the interface 24, a locator may be transmitted which enables the icon graphics to be located from a remote source such as the Internet.

In some embodiments of the present invention, the user may organize the cached advertisements as desired into categories 22. In addition, the user may automatically sort the advertisements for display in a particular order based on the information contained in the advertising enhancement data 17. For example, advertisements relating to certain product types could be coded within the advertising enhancement data 17 so that they may automatically be sorted into predefined categories for display, in this arrangement, in the ad cache interface 20.

In still another embodiment of the present invention, instead of simply caching a single frame for the advertisement, the entire advertisement may be cached. For example, the user may operate a button interface to automatically begin caching a desirable advertisement. The user may operate the button interface a second time to indicate the end of the material that is to be cached. In addition, each advertisement may be coded so that when the user mouse clicks on a given advertisement, enhancement data 17 enables the entire advertisement to be automatically cached. Either the entire advertisement may be cached at the time or the advertisement may be retrieved from an external source (such as over the Internet) for subsequent redisplay in full format.

In accordance with still another embodiment of the present invention, the caching of advertising material may be implemented automatically. In one embodiment of the present invention, the user may enter information into a graphical user interface which identifies the types of information the user is interested in. This information may be converted into codes and when the corresponding codes in the advertising enhancement data 17 are present, the data related to the advertisement may be cached automatically.

Referring now to Figure 6, the transmitter 12 may include software 56 for incorporating the advertising enhancement data 17 into the A/V content stream transported to the receiver 16. Initially, the video content is received from a content creator as indicated in block 58. That content is then incorporated with the advertising data 17 which may be received from advertisers as indicated in block 60. The combined content and ancillary data 15 together with advertising enhancement data 17 may be transmitted to a plurality of receivers as indicated in block 62.

While the present invention has been described with respect to a limited number of embodiments, those skilled in the art will appreciate numerous modifications and variations therefrom. It is intended that the appended claims cover all such modifications and variations as fall within the scope of this present invention.

## Claims

1. A method, comprising:
transmitting video content(13) to a receiver (16); and
transmitting enhancement data (17) about an advertisement included in said video content (13) to said receiver (16);
**characterised by**
transmitting software with said enhancement data (17) to said receiver (16) which is used by the receiver (16) to cache information about said advertisement.

2. The method according to claim 1, wherein said enhancement data (17) includes information about how to obtain an advertised product.

3. The method according to claim 1 or 2, wherein said enhancement data (17) includes data which enables a user to print a coupon for the advertised product.

4. The method according to any one of the preceding claims, wherein said enhancement data (17) includes information that assists a user in obtaining a product specification.

5. The method according to any one of the preceding claims, wherein said enhancement data (17) includes information to create a graphical icon (24) representing the advertisement for display and user selection on said receiver (16).

6. A method, comprising:
receiving video content (13) by a receiver (16); and
receiving enhancement data (17) about an advertisement included in said video content (13) by said receiver (16);
**characterised by**
receiving software with said enhancement data(17) by said receiver (16) which may be used by the receiver (16) to cache information about said advertisement.

7. The method according to claim 6, wherein representations of a plurality of selected advertisements (24b) are displayed.

8. The method according to claim 6 or 7, including causing said advertisements to be selected and stored automatically.

9. A system, comprising:
a transmitter (12) that transmits video content (13) and
enhancement data (17) about an advertisement included in said video content (13) to a receiver (16);
**characterised in that**
said transmitter (12) further transmits software with said enhancement data (17) to said receiver (16) which is used by the receiver (16) to cache information about said advertisement.

10. The system according to claim 9, wherein said enhancement data (17) includes data which enables a user to print a coupon for an advertised product.

11. The system according to claim 9 or 10, wherein said enhancement data (17) includes data that assists a user in obtaining a product specification.

12. A system, comprising:
a processor-based device (16) that receives video content (13) and enhancement data (17) about an advertisement included in said video content (13);
**characterised in that**
said processor-based device (16) further receives software with said enhancement data (17) by said receiver (16) which it may use to cache information about said advertisement.

13. The system according to claim 12, wherein said software may be used to cache a plurality of advertisements received with said video content (13).

14. The system according to claim 12 or 13, wherein said software creates a graphical user interface (24) including a plurality of graphical depictions representing advertisements stored in said device (16).

15. The system according to claim 14, wherein said depictions are organised topically.

16. The system according to any one of claims 12 to 15, wherein said software produces a graphical user interface (28) which enables the user to request additional information about a particular one of said advertisements.

17. The system according to claim 14 or 15, wherein said software enables said depictions to be clicked on to obtain additional information related to the advertisement.

18. The system according to any one of claims 12 to 17, including a display (20) coupled to said processor-based device, said device automatically storing a representation of an advertisement selected by a user.

19. The system according to claim 18, wherein said representation is in the form of a frame that is captured when the user selects the advertisement.

20. The system according to claim 19, wherein said captured frame is linked to the enhancement data related to said advertisement.

21. The system according to any one of claims 12 to 20, wherein said software extracts additional information about the product advertised in an advertisement and makes that information available upon request from the user.

22. An article, comprising a medium storing instructions that cause a processor-based system (12) to:
transmit video content (13) and enhancement data (17) about an advertisement included in said video content (13) to a receiver (16);
**characterised by**
further storing instructions that cause said processor-based system (12) to transmit software with said enhancement data (17) to said receiver (16) which may be used by the receiver (16) to cache information about said advertisement.

23. The article according to claim 22, wherein said enhancement data (17) includes information to create a graphical icon (24) representing an advertisement for display and user selection on the receiver (16).

24. The article according to claim 22 or 23, wherein said enhancement data (17) includes information about how to obtain additional information about an advertised product.

25. The article according to any one of claims 22 to 24, wherein said enhancement data (17) includes data which enables a user to print a coupon for the advertised product.

26. The article according to any one of claims 22 to 25, wherein said enhancement data (17) includes information that assists the user in obtaining a product specification.

27. An article comprising a medium storing instructions that cause a processor-based system (16) to:
receive video content (13) and enhancement data (17) about an advertisement included in said video content (13);
**characterised by**
further storing instructions that cause said processor-based system (16) to receive software with said enhancement data (17) which it may use to cache information about said advertisement.

28. The article according to claim 27, further storing instructions that cause the processor-based system (16) to display representations of a plurality of selected advertisements.

29. The article according to claim 27 or 28, further storing instructions that cause the processor-based system (16) to automatically select said advertisements for display as a plurality of representations of selected advertisements.

## Patentansprüche

1. Verfahren, umfassend:
Übertragen von Videoinhalt (13) zu einem Empfänger (16); und
Übertragen von Erweiterungsdaten (17) über eine im Videoinhalt (13) enthaltene Anzeige zu dem Empfänger (16);
**gekennzeichnet durch**
Übertragen von Software mit den Erweiterungsdaten (17) zu dem Empfänger (16), die vom Empfänger (16) zum Speichern von Information über die Anzeige verwendet wird.

2. Verfahren nach Anspruch 1, wobei die Erweiterungsdaten (17) Information darüber umfassen, wie ein beworbenes Produkt erhalten werden kann.

3. Verfahren nach Anspruch 1 oder 2, wobei die Erweiterungsdaten Daten umfassen, die einem Bediener das Drucken eines Coupons für das beworbene Produkt ermöglichen.

4. Verfahren nach einem der vorangehenden Ansprüche, wobei die Erweiterungsdaten (17) Information umfassen, die einem Bediener beim Erhalten einer Produktspezifikation hilft.

5. Verfahren nach einem der vorangehenden Ansprüche, wobei die Erweiterungsdaten Information zum Erzeugen eines graphischen Symbols (24) umfassen, das die Anzeige für Wiedergabe und Bedienerauswahl auf dem Empfänger (16) repräsentiert.

6. Verfahren, umfassend:
Empfangen von Videoinhalt (13) durch einen Empfänger (16); und
Empfangen von Erweiterungsdaten (17) über eine im Videoinhalt (13) enthaltene Anzeige durch den Empfänger (16);
**gekennzeichnet durch**
Empfangen von Software mit den Erweiterungsdaten (17) **durch** den Empfänger (16), die vom Empfänger (16) zum Speichern von Information über die Anzeige verwendet werden kann.

7. Verfahren nach Anspruch 6, wobei Repräsentationen einer Vielzahl von ausgewählten Anzeigen (24b) dargestellt werden.

8. Verfahren nach Anspruch 6 oder 7, das Veranlassen von automatischem Auswählen und Speichern der Anzeigen umfasst.

9. System, umfassend:
einen Sender (12), der Videoinhalt (13) und Erweiterungsdaten (17) über eine im Videoinhalt enthaltene Anzeige zu einem Empfänger (16) überträgt;
**dadurch gekennzeichnet, dass**
der Sender (12) außerdem Software mit den Erweiterungsdaten (17) zu dem Empfänger (16) überträgt, die von dem Empfänger (16) zum Speichern von Information über die Anzeige verwendet wird.

10. System nach Anspruch 9, wobei die Erweiterungsdaten (17) Daten umfassen, die einem Bediener das Drucken eines Coupons für ein beworbenes Produkt ermöglichen.

11. System nach Anspruch 9 oder 10, wobei die Erweiterungsdaten (17) Daten umfassen, die einem Bediener beim Erhalten einer Produktspezifikation helfen.

12. System, umfassend:
ein prozessorbasiertes Gerät (16), das Videoinhalt (13) und Erweiterungsdaten (17) über eine im Videoinhalt (13) enthaltene Anzeige empfängt;
**dadurch gekennzeichnet, dass**
das prozessorbasierte Gerät (16) außerdem Software mit den Erweiterungsdaten durch den Empfänger (16) empfängt, die es zum Speichern von Information über die Anzeige verwenden kann.

13. System nach Anspruch 12, wobei die Software zum Speichern einer Vielzahl von mit dem Videoinhalt (13) empfangenen Anzeigen verwendet werden kann.

14. System nach Anspruch 12 oder 13, wobei die Software eine graphische Benutzeroberfläche (24) erzeugt, die eine Vielzahl von graphischen Darstellungen umfasst, die in dem Gerät (16) gespeicherte Anzeigen repräsentieren.

15. System nach Anspruch 14, wobei die Darstellungen thematisch geordnet sind.

16. System nach einem der Ansprüche 12 bis 15, wobei die Software eine graphische Benutzeroberfläche (28) erzeugt, die dem Bediener das Anfordern zusätzlicher Information über eine bestimmte der Anzeigen ermöglicht.

17. System nach Anspruch 14 oder 15, wobei die Software das Klicken auf die Darstellungen ermöglicht, um zusätzliche, die Anzeige betreffende Information zu erhalten.

18. System nach einem der Ansprüche 12 bis 17, das ein an das prozessorbasierte Gerät gekoppeltes Display (20) umfasst, wobei das Gerät automatisch eine Repräsentation einer von einem Bediener gewählten Anzeige speichert.

19. System nach Anspruch 18, wobei die Repräsentation in der Form eines Frame ist, der erfasst wird, wenn der Bediener die Anzeige auswählt.

20. System nach Anspruch 19, wobei der erfasste Frame mit den die Anzeige betreffenden Erweiterungsdaten verlinkt ist.

21. System nach einem der Ansprüche 12 bis 20, wobei die Software zusätzliche Information über das in einer Anzeige beworbene Produkt extrahiert und diese Information auf Anfrage vom Bediener zugänglich macht.

22. Gegenstand, umfassend ein Medium, das Anweisungen speichert, die ein prozessorbasiertes System (12) dazu veranlassen,
Videoinhalt (13) und Erweiterungsdaten (17) über eine im Videoinhalt (13) enthaltene Anzeige zu einem Empfänger (16) zu übertragen;
**dadurch gekennzeichnet, dass**
das Medium außerdem Anweisungen speichert, die das prozessorbasierte System (12) dazu veranlassen, Software mit den Erweiterungsdaten (17) zu dem Empfänger (16) zu übertragen, die vom Empfänger zum Speichern von Information über die Anzeige verwendet werden kann.

23. Gegenstand nach Anspruch 22, wobei die Erweiterungsdaten (17) Information zum Erzeugen eines graphischen Symbols (24) umfassen, das eine Anzeige für Darstellung und Bedienerauswahl auf dem Empfänger (16) repräsentiert.

24. Gegenstand nach Anspruch 22 oder 23, wobei die Erweiterungsdaten (17) Information darüber umfassen, wie zusätzliche Information über ein beworbenes Produkt erhalten werden kann.

25. Gegenstand nach einem der Ansprüche 22 bis 24, wobei die Erweiterungsdaten (17) Daten umfassen, die einem Bediener das Drucken eines Coupons für das beworbene Produkt ermöglichen.

26. Gegenstand nach einem der Ansprüche 22 bis 25, wobei die Erweiterungsdaten (17) Information umfassen, die dem Bediener beim Erhalten einer Produktspezifikation hilft.

27. Gegenstand, umfassend ein Medium, das Anweisungen speichert, die ein prozessorbasiertes System (16) dazu veranlassen,
Videoinhalt (13) und Erweiterungsdaten (17) über eine im Videoinhalt (13) enthaltene Anzeige zu empfangen;
**dadurch gekennzeichnet, dass**
das Medium außerdem Anweisungen speichert, die das prozessorbasierte System (16) dazu veranlassen, Software mit den Erweiterungsdaten (17) zu empfangen, die es zum Speichern von Information über die Anzeige verwenden kann.

28. Gegenstand nach Anspruch 27, der außerdem Anweisungen speichert, die das prozessorbasierte System (16) dazu veranlassen, Repräsentationen einer Vielzahl von ausgewählten Anzeigen darzustellen.

29. Gegenstand nach Anspruch 27 oder 28, der außerdem Anweisungen speichert, die das prozessorbasierte System (16) dazu veranlassen, automatisch die Anzeigen für Darstellung als eine Vielzahl von Repräsentationen von ausgewählten Anzeigen auszuwählen.

## Revendications

1. Procédé comprenant :
la transmission de contenu vidéo (13) à un récepteur (16) ; et la transmission de données d'enrichissement (17) concernant une publicité incluse dans ledit contenu vidéo (13) audit récepteur (16) ;
**caractérisé par**
la transmission du logiciel avec lesdites données d'enrichissement (17) audit récepteur (16), lequel est utilisé par le récepteur (16) pour traiter à part les informations sur ladite publicité.

2. Procédé selon la revendication 1, dans lequel lesdites données d'enrichissement (17) comprennent des informations sur la manière d'obtenir un produit objet de la publicité.

3. Procédé selon la revendication 1 ou 2, dans lequel lesdites données d'enrichissement (17) comprennent des données qui permettent à un utilisateur d'imprimer un coupon-réponse pour le produit objet de la publicité.

4. Procédé selon une quelconque des revendications précédentes, dans lequel lesdites données d'enrichissement (17) comprennent des informations qui assistent un utilisateur dans l'obtention d'une spécification de produit.

5. Procédé selon une quelconque des revendications précédentes, dans lequel lesdites données d'enrichissement (17) comprennent des informations pour créer une icône graphique (24) représentant la publicité à afficher et la sélection utilisateur sur ledit récepteur (16).

6. Procédé comprenant :
la réception du contenu vidéo (13) par un récepteur (16) ; et la réception des données d'enrichissement (17) concernant une publicité incluse dans ledit contenu vidéo (13) par ledit récepteur (16) ;
**caractérisé par**
la réception du logiciel avec lesdites données d'enrichissement (17) par ledit récepteur (16), lequel peut être utilisé par le récepteur (16) pour traiter à part les informations sur ladite publicité.

7. Procédé selon la revendication 6, dans lequel les représentations d'une pluralité de publicités sélectionnées (24b) sont affichées.

8. Procédé selon la revendication 6 ou 7, comprenant l'invitation desdites publicités à être sélectionnées et enregistrées automatiquement.

9. Système comprenant :
un émetteur (12) qui transmet le contenu vidéo (13) et les données d'enrichissement (17) concernant une publicité incluse dans ledit contenu vidéo (13) à un récepteur (16) ;
**caractérisé en ce que**
ledit émetteur (12) transmet en outre le logiciel avec lesdites données d'enrichissement (17) audit récepteur (16), lequel est utilisé par le récepteur (16) pour traiter à part les informations sur ladite publicité.

10. Système selon la revendication 9, dans lequel lesdites données d'enrichissement (17) comprennent des données qui permettent à un utilisateur d'imprimer un coupon-réponse pour un produit objet d'une publicité.

11. Système selon la revendication 9 ou 10, dans lequel lesdites données d'enrichissement (17) comprennent des données qui assistent un utilisateur dans l'obtention d'une spécification de produit.

12. Système comprenant :
un dispositif (16) basé sur un processeur qui reçoit le contenu vidéo (13) et les données d'enrichissement (17) concernant une publicité incluse dans ledit contenu vidéo (13) ;
**caractérisé en ce que**
ledit dispositif (16) basé sur un processeur reçoit en outre le logiciel avec lesdites données d'enrichissement (17) par ledit récepteur (16) que celui-ci peut utiliser pour traiter à part les informations concernant ladite publicité.

13. Système selon la revendication 12, dans lequel ledit logiciel peut être utilisé pour traiter à part une pluralité de publicités reçues avec ledit contenu vidéo (13).

14. Système selon la revendication 12 ou 13, dans lequel ledit logiciel crée une interface utilisateur graphique (24) comprenant une pluralité d'illustrations graphiques représentant les publicités stockées dans ledit dispositif (16).

15. Système selon la revendication 14, dans lequel lesdites illustrations sont organisées par sujets.

16. Système selon une quelconque des revendications 12 à 15, dans lequel ledit logiciel produit une interface utilisateur graphique (28) qui permet à l'utilisateur de demander des informations supplémentaires sur une publicité particulière parmi lesdites publicités.

17. Système selon la revendication 14 ou 15, dans lequel ledit logiciel permet de cliquer sur lesdites illustrations afin d'obtenir des informations supplémentaires relatives à la publicité.

18. Système selon une quelconque des revendications 12 à 17, comprenant un affichage (20) couplé audit dispositif basé sur un processeur, ledit dispositif enregistrant automatiquement une représentation d'une publicité sélectionnée par un utilisateur.

19. Système selon la revendication 18, dans lequel ladite représentation a la forme d'une image qui est capturée lorsque l'utilisateur sélectionne la publicité.

20. Système selon la revendication 19, dans lequel ladite image capturée est liée aux données d'enrichissement relatives à ladite publicité.

21. Système selon une quelconque des revendications 12 à 20, dans lequel ledit logiciel extrait les informations supplémentaires concernant le produit annoncé dans une publicité, et rend ces informations disponibles à la demande de l'utilisateur.

22. Article comprenant un support de stockage des instructions invitant un système basé sur un processeur (12) à :
transmettre le contenu vidéo (13) et les données d'enrichissement (17) concernant une publicité incluse dans ledit contenu vidéo (13) à un récepteur (16) ;
**caractérisé par**
l'enregistrement ultérieur des instructions qui invitent ledit système basé sur un processeur (12) à transmettre le logiciel avec lesdites données d'enrichissement (17) audit récepteur (16) qui peut être utilisé par le récepteur (16) pour traiter à part les informations sur ladite publicité.

23. Article selon la revendication 22, dans lequel lesdites données d'enrichissement (17) comprennent des informations pour créer une icône graphique (24) représentant une publicité à afficher et la sélection utilisateur sur le récepteur (16).

24. Article selon la revendication 22 ou 23, dans lequel lesdites données d'enrichissement (17) comprennent des informations sur la manière d'obtenir des informations supplémentaires sur un produit objet de la publicité.

25. Article selon une quelconque des revendications 22 à 24, dans lequel lesdites données d'enrichissement (17) comprennent des données qui permettent à un utilisateur d'imprimer un coupon-réponse pour le produit objet de la publicité.

26. Article selon une quelconque des revendications 22 à 25, dans lequel lesdites données d'enrichissement (17) comprennent des informations qui assistent l'utilisateur dans l'obtention d'une spécification de produit.

27. Article comprenant un support de stockage des instructions invitant un système basé sur un processeur (16) à :
recevoir le contenu vidéo (13) et les données d'enrichissement (17) concernant une publicité incluse dans ledit contenu vidéo (13) ;
**caractérisé par**
l'enregistrement ultérieur des instructions qui invitent ledit système basé sur un processeur (16) à recevoir le logiciel avec lesdites données d'enrichissement (17) que celui-ci peut utiliser pour traiter à part les informations sur ladite publicité.

28. Article selon la revendication 27, enregistrant en outre des instructions qui invitent le système basé sur un processeur (16) à afficher des représentations d'une pluralité de publicités sélectionnées.

29. Article selon la revendication 27 ou 28, enregistrant en outre des instructions qui invitent le système basé sur un processeur (16) à sélectionner automatiquement lesdites publicités à afficher comme une pluralité de représentations de publicités sélectionnées.
